Europäisches Patentamt

European Patent Office

Office européen des brevets

(19)

(11) Veröffentlichungsnummer: **0 009 173**
**B1**

**EUROPÄISCHE PATENTSCHRIFT**

(12)

(45) Veröffentlichungstag der Patentschrift:
**15.07.81**

(21) Anmeldenummer: **79103289.9**

(22) Anmeldetag: **05.09.79**

(51) Int. Cl.³: **B 01 D 1/24**, F 26 B 3/26,
**C 09 B 67/00**

(54) **Dünnschicht-Kontakttrockner.**

(30) Priorität: **16.09.78 DE 2840481**

(43) Veröffentlichungstag der Anmeldung:
**02.04.80 Patentblatt 80/7**

(45) Bekanntmachung des Hinweises auf die Patenterteilung:
**15.07.81 Patentblatt 81/28**

(84) Benannte Vertragsstaaten:
**CH DE FR GB IT**

(56) Entgegenhaltungen:
**FR-A-1 393 006**
**FR-A-1 398 427**
**FR-A-1 443 988**
**FR-A-1 485 525**

(73) Patentinhaber: **BAYER AG, Zentralbereich Patente,
Marken und Lizenzen, D-5090 Leverkusen 1, Bayerwerk
(DE)**

(72) Erfinder: **Mölls, Hans-Heinz, Dr.,
Max-Beckmann-Strasse 29, D-5090 Leverkusen (DE)**
Erfinder: **Kaspar, Vaclav, Dipl.-Ing., Morgengraben 2,
D-5000 Koeln 80 (DE)**
Erfinder: **Moutsokapas, Asterios, Ing. grad., Grosser
Busch 12, D-5060 Bergisch Gladbach 2 (DE)**

ACTORUM AG.

Dünnschicht-Kontakttrockner

Die Erfindung betrifft einen Dünnschicht-Kontakttrockner, enthaltend ein drehbares Einbauteil, eine Aufgabevorrichtung, eine Entnahmevorrichtung des getrockneten Produkts und einen Brüdenaustritt.

Es ist eine Dünnschichtapparatur bekannt (GB-A-795 871), bei der die starren Rotorkanten am eigentlichen Dünnschichtverdampfer durch drehbar an Scharnieren befestigte Kanten ersetzt sind. Der minimale Spalt zu der Wand der als Pendel ausgebildeten Kanten beträgt 0,3 bis 0,5 mm. Es kann damit eine dünne Schicht an der Innenseite eines zylindrischen Rohres eingestellt werden, und somit ist ein solcher Dünnschichtverdampfer auch als Dünnschichttrockner einsetzbar. Pumpbare Flüssigkeiten können so kontinuierlich in einem Schritt in einer Dünnschichtapparatur zu rieselfähigem Feststoff verarbeitet werden.

Leider sind jedoch viele Produkte so kontinuierlich nicht zu trocknen, weil das zu trocknende Produkt häufig einen zähen Zustand durchläuft, dabei an der Innenwand klebt und auch die die Wand abstreifenden Elemente damit verkrusten, so dass sie nicht mehr genügend beweglich sind und als Abstreifer ausfallen. Im günstigsten Fall erhält man dann ein klumpiges Produkt; gewöhnlich fällt der Trockner aber bald ganz aus und muss sehr aufwendig gereinigt werden.

Aufgabe der Erfindung ist es, einen Mechanismus in einen Dünnschichtrockner einzubauen, mit dem die Trockenfläche abgestreift und mit dem eine Selbstreinigung der beweglichen Elemente erreicht wird. Diese Aufgabe wird dadurch gelöst, dass Verteilerkörper zwischen zueinander parallelen, am drehbaren Einbauteil befestigte Wankscheiben angeordnet und zwischen diesen Wankscheiben frei beweglich sind, die Normale auf der Wankscheibe mit der Rotationsachse des Einbauteils einen Winkel bis 45°, vorzugsweise 5 bis 25°, bildet, die Verteilerkörper die Innenmantelfläche teilweise berühren und durch Drehen des Einbauteils in eine relative Bewegung zu den Wankscheiben gesetzt werden, wobei jeder Punkt der inneren Trocknerfläche im Bereich des Einsatzes der Verteilerkörper von der Kante mindestens eines Verteilerkörpers berührt wird. Weitere vorteilhafte Ausgestaltungen der Erfindung sind in den Unteransprüchen beschrieben.

Von besonderem Vorteil bei der erfindungsgemässen Vorrichtung ist die erhöhte Betriebssicherheit. Das zu trocknende Gut wird durch die Verteilerkörper noch zusätzlich gemahlen, so dass Klumpen sicher vermieden werden. Es lassen sich die flüssigen Produkte gleichmässig auf den Austauschflächen ohne grössere Verkrustungen, ohne Blockierung und ohne Verstopfung der Apparatur unter vollständiger Ausnutzung der Austauschfläche verteilen. Die Vorrichtung ist hinreichend flexibel. Die Grösse und das Material der Verteilerkörper sowie die Zahl der Ebenen lässt sich in einem weiten Bereich an das zu trocknende Produkt anpassen.

Die erfindungsgemässen Trockner lassen sich in der chemischen Industrie, beispielsweise bei der Herstellung von Farbstoffen und Pigmenten, in der pharmazeutischen und photochemischen Industrie oder bei der Aufarbeitung von Abwässern anwenden. Die massgebenden verfahrenstechnischen Grössen, wie Filmdicke, Durchsatz, Leistungsbedarf, müssen in Vorversuchen festgelegt werden.

In dem Film auf der Innenmantelfläche wird durch die Verteilerkörper hohe Turbulenz erzeugt. Durch die Zentrifugalkraft, mit der die Verteilerkörper den Flüssigkeitsfilm an den Innenmantel pressen, wird eine Blasenschicht verdrängt, so dass meist eine höhere Heizwandtemperatur zugelassen werden kann. Es kann mit der erfindungsgemässen Vorrichtung grundsätzlich auch eine Vakuumtrocknung durchgeführt werden.

Die Erfindung ist in der Zeichnung dargestellt und im folgenden weiter beschrieben. Es zeigen:
Fig. 1  einen Längsschnitt durch einen Trockner;
Fig. 2  eine Draufsicht;
Fig. 3  einen Schnitt parallel zu einer Wankscheibe.

Der Trockner besteht im wesentlichen aus einem vertikalen zylindrischen Rohr 1 mit einem um eine Achse 2 drehbaren Einsatz. Das Rohr 1 ist mantelbeheizt 3. Über den Stutzen 4 wird das zu trocknende Produkt eingespeist, über den Stutzen 5 entweichen die Brüden; das trockene Produkt wird am Bodenflansch 6 entnommen. Der Produktverteilerring ebenso wie der Antrieb sind nicht dargestellt. An der Achse 2 sind siebzehn kreisförmige Wankscheiben 7 befestigt, zwischen welchen Verteilerkörper 8, 9 angeordnet sind. Sie sind alle zueinander parallel, aber geneigt zur Achse 2. Der Winkel zwischen der Normalen auf die Wankscheiben und der Achse beträgt in diesem Beispiel 15°. Der Abstand vom Umfang der Wankscheibe 7 zur Innenmantelfläche ist nicht überall gleich. Das stört nicht, es muss jedoch die Grösse der Verteilerkörper 8, 9 auf diese Spalten abgestimmt sein. Die Wankscheiben müssen die Verteilerkörper, die sonst nicht geführt sind, innerhalb des durch zwei Wankscheiben begrenzten Raumes halten. Die Höhe der Verteilerkörper ist ungefähr 1 mm kleiner als der Abstand zwischen zwei Wankscheiben.

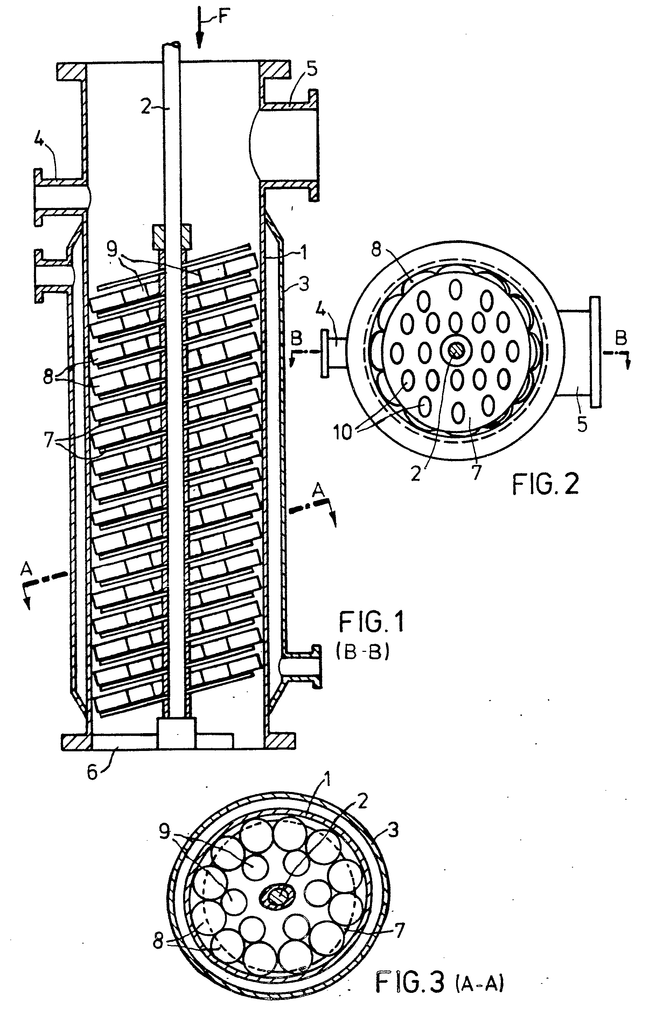

Fig. 2 ist eine Draufsicht auf den Dünnschicht-Kontakttrockner in Blickrichtung F (Fig. 1). Der in Fig. 1 dargestellte Längsschnitt ist durch B-B angedeutet. Man blickt auf den obersten Boden 7 mit den in jeder Wankscheibe angebrachten Bohrungen 10. Durch diese Öffnungen gelangt das Produkt auch im Inneren des Trockners nach unten; insbesondere dienen sie zum Durchtritt der Brüden nach oben.

Die Verteilerkörper 8 sind teilweise zu erkennen. Sie berühren teilweise die Innenfläche des

Rohres 1. Es handelt sich um zylindrische Verteilerkörper.

In dieser Darstellung berühren auf der linken Seite die Oberkanten, auf der rechten Seite die Unterkanten der Verteilerkörper die Innenflächen des Rohres.

In Fig. 3 sind zwei Arten von Verteilerkörpern 8, 9 zu erkennen. Es handelt sich um einen Schnitt A-A parallel zu einer Wankscheibe 7.

In den Figuren sind die Verteilerkörper 8, 9 gleichmässig geordnet eingezeichnet. Im Betrieb liegt dieser geordnete Zustand nicht mehr vor. Es ist auch nicht erforderlich, die Zahl und den Durchmesser der Verteilerkörper 8 so auf den Innendurchmesser des zylindrischen Rohres 1 abzustimmen, dass sich alle Verteilerkörper 8 immer gegenseitig berühren. Es ist lediglich die Bedingung zu erfüllen, dass bei einer bestimmten Neigung der Wankscheibe 7 die Höhe der Verteilerkörper so gewählt wird, dass der Berührungspunkt zwischen der Innenmantelfläche und der Unterkante eines Verteilerkörpers, der sich im höchsten Punkt an der Wankscheibe befindet, höher liegt als der Berührungspunkt zwischen der Innenmantelfläche und der Oberkante eines Verteilerkörpers, der sich im tiefsten Punkt an der darüberliegenden Wankscheibe befindet. Dadurch ist sichergestellt, dass jede Stelle der Innenwand im Bereich des Einsatzes von Verteilerkörpern überstrichen und abgestreift wird. Der Durchmesser der Verteilerkörper muss mindestens so gross gewählt werden, dass die Verteilerkörper nicht durch die wegen der Neigung der kreisförmigen Wankscheiben zwangsläufig auftretenden Schlitze zur Rohrinnenwand durchrutschen können.

Die Abstände der Wankscheiben müssen nicht gleich sein. Bei unterschiedlichen Abständen müssen entsprechend auch unterschiedlich hohe Verteilerkörper eingesetzt werden.

Beispiel
Die Dispersion von «Disperse Red 60» wird in dem erfindungsgemässen Trockner bei folgenden Bedingungen getrocknet: Anfangsfeuchte beträgt 85%, die Heizmitteltemperatur 130 °C. Die Trocknung verläuft ohne Schwierigkeiten, es wird stundenlang ein feinpulvriges, homogenes Trockenprodukt mit einer Restfeuchte von 1,5% geliefert.

Trocknet man dagegen die gleiche Dispersion in einem handelsüblichen Dünnschicht-Kontakttrockner mit Pendelelementen, Anfangsfeuchte 85%, Heizmitteltemperatur ebenfalls 130 °C, enthält das getrocknete Produkt Feuchtklumpen, der Querschnitt des Trockners wird teilweise blockiert. Die Rotorwelle und die Pendelelemente sind mit feuchtem Produkt stark belegt, nach einigen Stunden blockiert der Rotor.

## Patentansprüche

1. Dünnschicht-Kontakttrockner, enthaltend ein drehbares Einbauteil, eine Aufgabevorrichtung (4), eine Entnahmevorrichtung (6) des getrockneten Produktes und einen Brüdenaustritt (5), dadurch gekennzeichnet, dass Verteilerkörper (8, 9) zwischen zueinander parallelen, am drehbaren Einbauteil befestigte Wankscheiben (7) angeordnet und zwischen diesen Wankscheiben frei beweglich sind, die Normale auf der Wankscheibe (7) mit der Rotationsachse (2) des Einbauteils einen Winkel bis 45°, vorzugsweise 5 bis 25°, bildet, die Verteilerkörper (8, 9) die Innenmantelfläche teilweise berühren und durch Drehen des Einbauteils in eine relative Bewegung zu den Wankscheiben gesetzt werden, wobei jeder Punkt der inneren Trocknerfläche von der Kante mindestens eines Verteilerkörpers berührt wird.

2. Vorrichtung nach Anspruch 1, dadurch gekennzeichnet, dass die Rotationsachse (2) des Einbauteils vertikal angeordnet ist.

3. Vorrichtung nach den Ansprüchen 1 und 2, dadurch gekennzeichnet, dass die Verteilerkörper (8, 9) näherungsweise rotationssymmetrisch um eine Achse, die parallel zu der Senkrechten der Wankscheiben (7) ist, sind.

4. Vorrichtung nach Anspruch 3, dadurch gekennzeichnet, dass die Verteilerkörper (8, 9) zylindrische Form haben.

5. Vorrichtung nach den Ansprüchen 3 und 4, dadurch gekennzeichnet, dass die Höhe der Verteilerkörper (8, 9) ungefähr 1 mm kleiner ist als der Abstand zwischen zwei Wankscheiben (7).

6. Vorrichtung nach den Ansprüchen 1 bis 5, dadurch gekennzeichnet, dass die Abstände der Wankscheiben (7) untereinander unterschiedlich sind.

7. Vorrichtung nach den Ansprüchen 1 bis 6, dadurch gekennzeichnet, dass unterschiedliche Verteilerkörper (8, 9) zwischen zwei Wankscheiben (7) kombiniert sind.

## Claims

1. Thin layer contact drier containing a rotatable installation, a fed device (4), a discharge device (6) for dried product and a vapour outlet (5), characterised in that distributor elements (8, 9) are arranged between wobble discs, which are parallel to each other and fixed to the rotatable installation, and are freely movable between these wobble discs, the normal on the wobble disc (7) forms an angle of up to 45°, preferably 5 to 25°, with the rotational axis (2) of the installation, the distributor elements (8, 9) partly touch the internal surface and by rotation of the installation are set into motion relative to the wobble discs, each point of the internal surface of the drier being touched by the edge of at least one distributor element.

2. Apparatus according to claim 1, characterised in that the rotational axis (2) of the installation is arranged vertically.

3. Apparatus according to claim 1 and 2, characterised in that the distributor elements (8, 9) are approximately cyclically symmetrical about an axis which is parallel to the perpendicular to the wobble discs (7).

4. Apparatus according to claim 3, characterised in that the distributor elements (8, 9) are cylindrical.

5. Apparatus according to claims 3 and 4, characterised in that the height of the distributor elements (8, 9) is approximately 1 mm less than the distance between two wobble discs (7).

6. Apparatus according to claims 1 to 5, characterised in that the distances between the wobble discs (7) differ from each other.

7. Apparatus according to claims 1 to 6, characterised in that differing distributor elements (8, 9) are combined between two wobble discs (7).

## Revendications

1. Séchoir par contact à couche mince, comprenant une pièce interne rotative, un dispositif de chargement (4), un dispositif (6) de prélèvement du produit séché ainsi qu'une sortie des vapeurs (5), caractérisé en ce que des éléments de répartition (8, 9) qui sont disposés entre des plateaux oscillants parallèles (7) fixés sur l'élément interne rotatif sont librement mobiles entre ces plateaux oscillants, la perpendiculaire aux plateaux oscillants (7) inscrivant avec l'axe de rotation (2) de la pièce interne un angle pouvant atteindre 45, mais qui est de préférence de 5 à 25°, les éléments de distribution (8, 9) étant partiellement en contact avec la surface interne de l'enveloppe et la rotation de la pièce interne leur imposant un mouvement relatif par rapport aux plateaux oscillants, le bord d'au moins un élément de répartition entrant en contact avec chaque point de la surface interne du séchoir.

2. Dispositif selon la revendication 1, caractérisé en ce que l'axe de rotation (2) de la pièce interne est disposé verticalement.

3. Dispositif selon l'une des revendications 1 et 2, caractérisé en ce que les éléments de répartition (8, 9) sont approximativement symétriques de révolution autour d'un axe qui est parallèle à la perpendiculaire aux plateaux oscillants (7).

4. Dispositif selon la revendication 3, caractérisé en ce que les éléments de répartition (8, 9) ont une forme cylindrique.

5. Dispositif selon les revendications 3 et 4, prises ensemble, caractérisé en ce que la hauteur des éléments de répartition (8, 9) est d'environ 1 mm plus petite que la distance séparant deux plateaux oscillants (7).

6. Dispositif selon l'une quelconque des revendications 1 à 5, caractérisé en ce que les distances séparant les plateaux oscillants (7) diffèrent les unes des autres.

7. Dispositif selon l'une quelconque des revendications 1 à 6, caractérisé en ce que différents éléments de répartition (8, 9) sont combinés entre deux plateaux oscillants (7).

F

2

4

5

9

1

3

8

7

8

7

A

A

B

FIG.1
(B-B)

6

8

4

10

2

7

5

B

FIG.2

1

2

9

3

8

7

FIG.3 (A-A)